# EUROPEAN PATENT SPECIFICATION

(11) **EP 0 374 977 B1**
(45) Date of publication and mention of the grant of the patent: **18.11.1993**
(21) Application number: 89124018.6
(22) Date of filing: 27.12.1989
(51) Int. Cl.: G01B 11/30

(54) **Method and device for the detection and classification of the crimpling of a surface treatment**
Verfahren und Vorrichtung zum Detektieren und Klassifizieren der Kräuselung einer behandelten Oberfläche
Méthode et dispositif pour la détection et la classification du froncement d'une surface traitée

(30) Priority: 23.12.1988 IT 6815188
(43) Date of publication of application: 27.06.1990
(73) Proprietor: FIAT AUTO S.p.A., 10135 Torino (IT)
(72) Inventor: Varrone, Piergiorgio, 10025 Pino Torinese (IT); Burzio, Gianfranco, 12022 Carmagnola (IT); Damiani, Sergio, 10100 Torino (IT)
(74) Representative: Jorio, Paolo

(56) References cited:
- JP-A- 5 271 289
- US-A- 2 867 149
- US-A- 4 682 041
- PATENT ABSTRACTS OF JAPAN, vol. 7, no. 262 (P-238)[1407], 22nd November 1983; & JP-A-58 144 731 (HITACHI)
- PATENT ABSTRACTS OF JAPAN, vol. 9, no. 257 (P-396)[1980], 15th Ocotber 1985; & JP-A-60 107 506 (HITACHI)
- PATENT ABSTRACTS OF JAPAN, vol. 7, no. 224 (P-227)[1369], 5th October 1983; & JP-A-58 115 313 (MATSUSHITA)
- PATENT ABSTRACTS OF JAPAN, vol. 7, no. 198 (P-220)[1343], 2nd September 1983; & JP-A-58 97 608 (NIPPON PAINT)

## Description

The present invention relates to a method and device for the detection and classification of the crimpling of a surface treatment.

More specifically, the present invention relates to a method and device which may be beneficially used for evaluating the aesthetic appearance of a sprayed vehicle body, making improvements to the paint spraying process so as to obtain perfect results, especially as far as the surface spread of the paint is concerned.

As is well known, an incomplete spread of the paint causes a medium-fine grained wrinkle on the surface, with random pitch and direction, resembling orange peel (and said wrinkle is often referred to using this name).

At the present time, the detection and classification of crimpling are performed manually by projecting, onto the surface under examination, lattices comprising light (white) bars and dark (black) bars in alternation and with decreasing pitch. When the observer notes that the paint crimpling distorts the image reflected by the surface under examination so that two adjacent dark bars merge, the corresponding number of the lattice is considered as the spread value (which normally varies from 6 to 20, where 20 represents a perfect reflection and therefore zero crimpling).

The methods currently employed present drawbacks both from an operational point of view, in that all the operations are performed manually, and as regards the results obtained, as the spread is attributed in a subjective manner.

It is also known from the document US-A-4 682 041 a device for measuring the coating quality of a coated surface, where a beam reflected from a plurality of areas under examination is detected. Therein either the variance value or the average peak value of the detected areas are calculated with respect to the values of a reference portion. The calculated values are finally classified according to recorded values of predetermined ranks.

It is the object of the present invention is to provide a method for the classification of the crimpling of a surface treatment and a device operating on the basis of this method, which overcome the drawbacks of current methods and devices set forth above.

According to the present invention there is provided a method for the detection and classification of the crimpling of a surface treatment, comprising, in order, the steps of:
illuminating an area to be examined by means of a luminous beam essentially comprising a plurality of light areas alternated with dark areas and preferably with clearcut edges between the respective adjacent areas;
detecting a beam reflected by said area under examination using image detector means adapted to scan said area so as to obtain an alternating electrical signal for the pixels of the image on detection of said dark and light areas;
characterized by the following steps:
calculating the gradient of said electrical signal as the absolute value of the amplitude difference of nearby pixels of said electrical signals;
generating a diagram of the number of pixels having the calculated values of gradient; and
comparing the values of the diagram, obtained at the end of an inspection of said area under examination, with preset reference values.

The present invention also relates to a device for the detection and classification of the crimpling of a surface treatment, comprising illuminating means adapted to illuminate an area to be examined of said surface by means of a luminous beam essentially comprising a plurality of light areas alternated with dark areas and with clearcut edges between the respective adjacent areas, image detector means for scanning said area so as to obtain an alternating electrical signal for the pixels of the image on detection of said dark and light areas,
characterized by calculating means for calculating the gradient of said electrical signal as the absolute value of the amplitude difference of nearby pixels of said electrical signals;
diagram generating means for generating a diagram of the number of pixels having the calculated values of gradient; and
comparing means for comparing the values of the diagram, obtained at the end of an inspection of said area under examination, with preset reference values.

The present invention will be described by way of a preferred embodiment with reference to the accompanying diagrams, in which:
FIGURE 1 is a schematic diagram of a device for the detection and classification of the crimpling of a surface treatment designed in accordance with the present invention;
FIGURES 2, 3 and 4 illustrate the progression of some signals detected or calculated by the device shown in FIGURE 1 in three different operating conditions;
FIGURES 5, 6 and 7 are graphic representations obtained using the device shown in FIGURE 1 and referring to the operating conditions illustrated, respectively, in FIGURES 2, 3 and 4; and
FIGURE 8 shows an example, on an enlarged scale, of a possible operating condition that may arise during the use of the device shown in FIGURE 1.

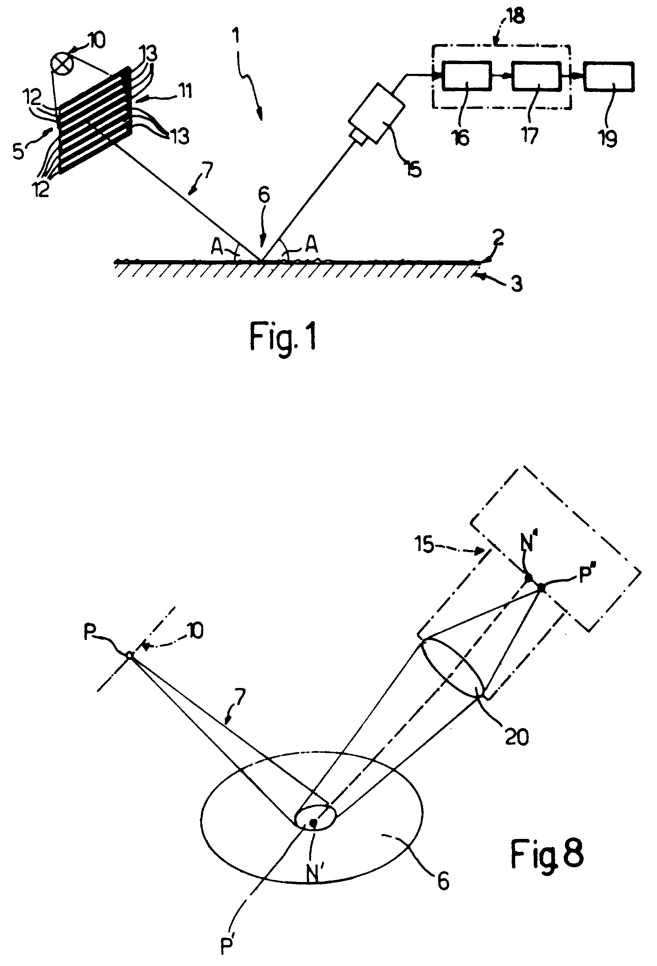

With particular reference to FIGURE 1, the numeral 1 indicates a device for performing the detection and classification of the crimpling of a surface treatment. More specifically, device 1 may be beneficially used for the detection and classification of the crimpling of a layer 2 of paint deposited on a surface of a metal sheet 3 constituting the outermost part of a vehicle bodywork, for example, of a motorcar.

Device 1 is of the type comprising illuminating means 5 adapted to illuminate an area 6 to be examined of the surface of layer 2 by means of a luminous beam 7 essentially comprising a plurality of light areas alternated with dark areas and with clearcut edges between the respective adjacent areas.

Said means 5 essentially comprise a light source 10 and a screen 11 displaying a plurality of opaque bars 12 alternated with transparent bars 13. In order to use device 1 correctly, source 10 and screen 11 should be set so that onto a surface of layer 2 of paint is reflected a lattice consisting of light and dark areas with clearcut adjacent edges.

In accordance with the present invention, device 1 comprises:
image detector means 15 adapted to explore area 6 of layer 2 by scanning, so as to obtain an alternate electrical signal on subsequent detection of the light and dark areas of said lattice; and
calculating means 16 which execute a mathematical calculation of the gradient of the signal generated by image detector means 15.

Image detector means 15 preferably comprise a telecamera set directly opposite source 10 and positioned so that the frame shows the area of incidence of beam 7.

The scan lines of telecamera 15 should be set perpendicular to the lattice bars projected on the surface of area 6 of layer 2; nevertheless, the method explained in the present invention and described subsequently provides for any setting between said telecamera and lattice, provided that it is set in a symmetrical, specular position.

The angle of incidence, indicated by the letter A, made by beam 7 with the surface of layer 2 is not fixed; for example, it could be 45°.

Device 1 also comprises comparing means 17 which carry out a comparative analysis of the bargraphs obtained at the end of an inspection of area 6 under examination, with preset reference values.

Calculating means 16 and comparing means 17 together form a video signal processing system 18 equipped with an output which directly supplies a display device 19 which may comprise, for example, a monitor and/or a printer (not illustrated).

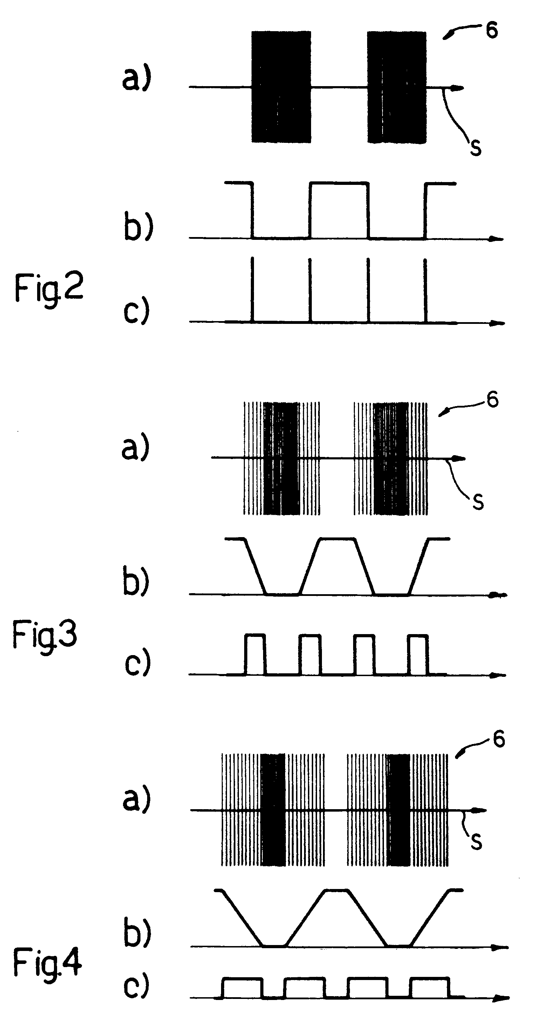

FIGURES 2a, 3a and 4a show three different instances of reflection of luminous beam 7 by area 6 under examination, caused by three different degrees of crimpling (zero, medium, high) of the surface of layer 2 of paint. In said cases, telecamera 15 generates, during scanning said surface performed using a scan line indicated by the letter S, three different electrical signals (FIGURES 2b, 3b, 4b), whose the absolute gradient value, calculated by calculating means 16, is given in FIGURES 2c, 2b, 2c, respectively. Scanning of the surface of area 6 by telecamera 15 should ideally be performed along lines which, as stated above, are set perpendicular to bars 12, 13 projected onto the surface of area 6.

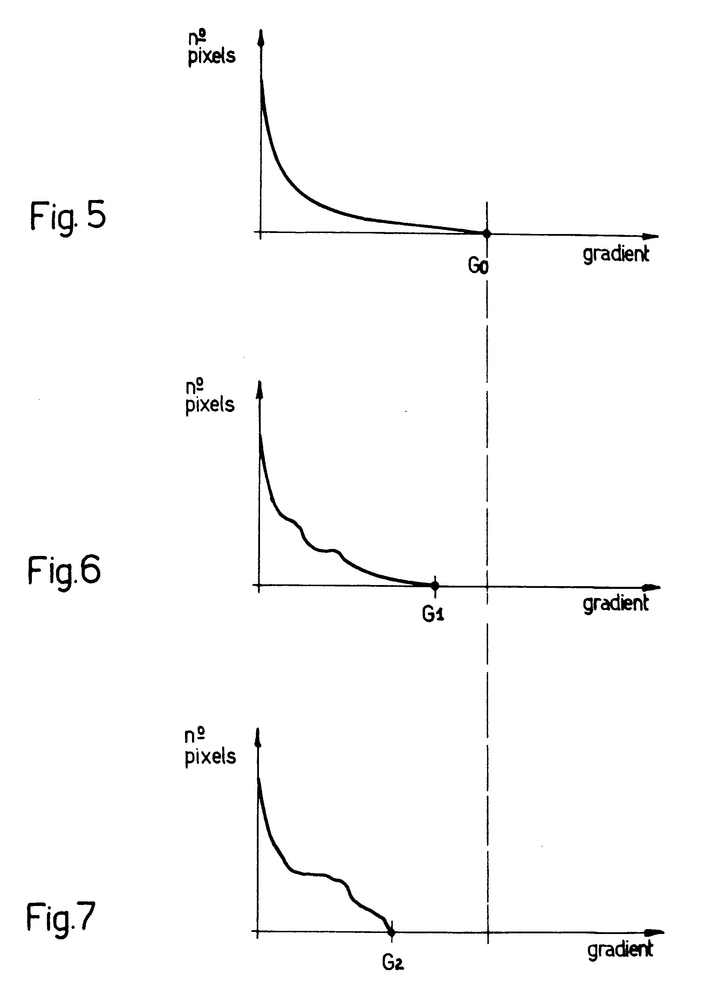

FIGURES 5, 6 and 7 show the gradient/number of pixels bargraphs conveniently displayed on device 19 and obtained by means of processing system 18, on the output signal generated by telecamera 15, with reference to FIGURES 2, 3 and 4, respectively.

The gradient was calculated as an absolute value of the difference in amplitude of the video signal of nearby pixels of telecamera 15, and the maximum value reached is indicated by G0, G1 and G2, respectively, in FIGURES 5, 6 and 7.

We should like to point out that the graphic representations shown in FIGURES 5, 6 and 7 are true examples and are thus affected by the noise created during the acquisition and subsequent processing of the optical signal by telecamera 15 and processing system 18.

Finally, FIGURE shows the path of an elementary portion P of light source 10 illuminating a respective portion P′ of area 6, and is focused on a corresponding portion P˝ of the image plane of telecamera 15, by means of a focusing lens 20. Any disturbance, indicated by N′, on a crimped surface of paint, causes luminous beam 7 to be reflected into an area N˝ of the image plane of telecamera 15, in a position out of focus with portion P˝.

It can clearly be seen that the data obtained using device 1 are little affected by concomitant, dotted superficial defects, as these defects are reflected totally out of focus and as detection is of a statistical type, based on a large number of pixels.

The method put forward in the present invention for the detection and classification of the crimpling of a surface treatment essentially comprises the following operations:
illumination of area 6 by luminous beam 7 essentially comprising a plurality of light areas alternated with dark areas and preferably with clearcut edges between the respective adjacent areas;
detection of the beam reflected by area 6 by means of image detecting means 15, which scan area 6 so as to obtain an alternate electrical signal on subsequent detection of said light and dark areas;
execution, by means 16, of a mathematical calculation of the gradient and corresponding number of pixels of said signal generated by image detecting means 15, and drawing of a gradient/number of pixels bargraph;
execution, by comparing means 17, of a comparative analysis of the bargraph, obtained at the end of an inspection of area 6, with preset reference values.

According to the type of paint surface crimpling, at the end of the inspection of the surface under examination, different bargraphs are obtained, as is shown, for example, in FIGURES 5, 6 and 7. A study of the values obtained (G0, G1 and G2) provides an indication of the crimpling, which increases as the value calculated for the respective gradient on the graph decreases. For example, a severely crimped surface causes, along the edges between the dark and light areas, a gradual merging of these areas with a gradient which tends towards zero.

As far as the dimensions are concerned, the maximum width of bars 12 and 13 forming the lattice, irrespective of their position with respect to telecamera 15, is that defined by the optic lever represented by the maximum angle of inclination of the elementary portions constituting the crimped surface of layer 2, and by the distance between source 10 and the actual surface of layer 2. The maximum inclination considered must not permit the reflection, by said elementary portions of layer 2, of different bars of the same type (dark or light). The number of bars contained in the lattice displayed on screen 11, respecting the minimum dimensions established on the basis of the consideration set forth above, has no limits, provided that it does not prevent a valid statistical calculation from being made.

The classification of crimpling could be performed in the following way: first of all, the diagram obtained at the end of scanning the surface under examination (FIGURES 5, 6 and 7) may be subdivided into various parts and the corresponding spread value defined on the basis of previously prepared samples. The number of pixels in each of these parts should also be taken into account: if this number is lower than the preset minimum, the spread value to be considered is the first, moving from the right-hand side of the diagram to the left-hand side, that exceeds said minimum.

From the examination of the features of the present invention, it can clearly be observed that the method and device presented offer numerous advantages.

First of all, this crimpling measurement is totally automatic and thus does not involve subjective assessments made by the operator, nor does it depend on the colour of the paint under examination.

Concomitant and dotted surface defects do not falsify the measurement as they are reproduced completely out of focus on the image plane of telecamera 15.

Any curves or inaccuracies on the lattice, or imprecise focusing do not affect the results of the measurements (the scale can be reset), and a wide range of distances between the telecamera and the area under examination are possible, keeping the diaphragm of the telecamera lens slightly open.

It was observed that, using inclined lattices, it is also possible to distinguish crimpling not oriented in a random fashion, and to detect a maximum crimpling value even with orientations defined using peculiarly conformed lattices, such as curves or concentric rings. If a projection with relative motion is to be effected between the area under examination and device 1, use may be made of a light source 10 that provides an intermittent luminous beam appropriately synchronized with the image filming means.

Modifications may be made to the method and the device set forth above, without exceeding the scope of the present invention.

For example, the method set forth above, though developped as a way of detecting and classifying the crimpling of the paint on a motorcar bodywork, may also be used to great advantage for performing similar tasks on any other type of surface treatment.

## Claims

1. A method for the detection and classification of the crimpling of a surface treatment, comprising, in order, the steps of:
illuminating an area to be examined by means of a luminous beam essentially comprising a plurality of light areas alternated with dark areas and preferably with clearcut edges between the respective adjacent areas;
detecting a beam reflected by said area under examination using image detector means adapted to scan said area so as to obtain an alternating electrical signal for the pixels of the image on detection of said dark and light areas;
characterized by the following steps:
calculating the gradient of said electrical signal as the absolute value of the amplitude difference of nearby pixels of said electrical signals;
generating a diagram of the number of pixels having the calculated values of gradient; and
comparing the values of the diagram, obtained at the end of an inspection of said area under examination, with preset reference values.

2. A method as climed in claim 1, characterized in that it comprises the displaying of the values calculated for said gradients so as to obtain, at the end of scansion of said area under examination, a diagram in which the values calculated for said gradients are indicated in relation to the number of pixels of said image detectors; said diagram being subdivided into various parts each defining, by comparison with previously prepared samples, a corresponding spread value.

3. A method as claimed in claim 1 or 2, characterized in that the illumination of said area under examination is performed using an intermittent luminous beam.

4. A method as claimed in any of the previous claims, characterized in that it comprising relative maneouvring of said luminous beam and image detecting means in relation to said area under examination.

5. A device for the detection and classification of the crimpling of a surface treatment, comprising illuminating means (5) adapted to illuminate an area (6) to be examined of said surface by means of a luminous beam (7) essentially comprising a plurality of light areas alternated with dark areas and with clearcut edges between the respective adjacent areas, image detector means (15) for scanning said area (6) so as to obtain an alternating electrical signal for the pixels of the image on detection of said dark and light areas,
characterized by calculating means (16) for calculating the gradient of said electrical signal as the absolute value of the amplitude difference of nearby pixels of said electrical signals;
diagram generating means for generating a diagram of the number of pixels having the calculated values of gradient; and
comparing means (17) for comparing the values of the diagram, obtained at the end of an inspection of said area under examination, with preset reference values.

6. A device as claimed in claim 5, characterized in that said illuminating means (5) comprise a light source (10) and a screen (11) equipped with a plurality of opaque portions (12), alternated with transparent portions.

7. A device as claimed in claim 6, characterized in that said opaque and transparent portions (13, 12) are essentially straight.

8. A device as claimed in claim 6, characterized in that said opaque and transparent portions (13, 12) are curved.

9. A device as claimed in claim 8, characterized in that said curved portions are essentially annular and concentric.

10. A device as claimed in any of claims 5 to 9, characterized in that said opaque and transparent portions have essentially the same width.

11. A device as claimed in any of claims 5 to 10, characterized in that said opaque and transparent portions (13, 12) form a lattice and the minimum width of which is defined by the optical lever represented by the maximum angle of inclination of elementary portions forming the crimpled surface of said area (6) under examination and by the distance between said light source (10) and the surface of said area (6), so that the maximum inclination considered does not cause reflection, by said elementary portions of said area (6), of opaque or transparent portions of the same type.

12. A device as claimed in any of claims 5 to 11, characterized in that said image detecting means comprise at least one telecamera (15).

## Patentansprüche

1. Verfahren zum Erfassen und Klassifizieren der Welligkeit einer Oberflächenbehandlung, welches nacheinander die folgenden Schritte umfaßt:
Beleuchten eines zu prüfenden Bereiches mittels eines Strahlenbündels, das im wesentlichen mehrere helle Bereiche im Wechsel mit dunklen Bereichen und vorzugsweise mit scharfen Kanten zwischen jeweils benachbarten Bereichen umfaßt,
Erfassen eines durch den geprüften Bereich reflektierten Strahlenbündels unter Verwendung einer Bilddetektor-Einrichtung, die den Bereich abtasten kann, so daß ein elektrisches Wechselsignal für die Bildpunkte des Bildes beim Erfassen der dunklen und hellen Bereiche erhalten wird, gekennzeichnet durch die folgenden Schritte:
Berechnen des Gradienten des elektrischen Signals als Absolutwert der Amplitudendifferenz naheliegender Bildpunkte der elektrischen Signale,
Erzeugen eines Diagramms der Anzahl von Bildpunkten mit den berechneten Werten des Gradienten und
Vergleichen der Werte des Diagramms, das am Ende der Untersuchung des geprüften Bereiches erhalten wird, mit vorgegebenen Bezugswerten.

2. Verfahren nach Anspruch 1, dadurch gekennzeichnet, daß es das Anzeigen der für die Gradienten berechneten Werte umfaßt, um am Ende der Abtastung des geprüften Bereiches ein Diagramm zu erhalten, in dem die für die Gradienten berechneten Werte bezüglich der Anzahl der Bildpunkte der Bilddetektoren angegeben sind, wobei das Diagramm in verschiedene Teile unterteilt wird, von denen jeder durch Vergleich mit vorher gebildeten Probewerten einen entsprechenden Verteilungswert bestimmt.

3. Verfahren nach Anspruch 1 oder 2, dadurch gekennzeichnet, daß die Beleuchtung des geprüften Bereiches unter Verwendung eines unterbrochenen Strahlenbündels erfolgt.

4. Verfahren nach einem der vorhergehenden Ansprüche, dadurch gekennzeichnet, daß es die relative Bewegung des Strahlenbündels und der Bilddetektor-Einrichtung bezüglich des geprüften Bereiches umfaßt.

5. Vorrichtung zum Erfassen und Klassifizieren der Welligkeit einer Oberflächenbehandlung mit einer Beleuchtungseinrichtung (5), die einen zu prüfenden Bereich (6) der Oberfläche mit einem Strahlenbündel (7) beleuchten kann, das im wesentlichen mehrere helle Bereiche im Wechsel mit dunklen Bereichen und mit scharfen Kanten zwischen jeweils benachbarten Bereichen umfaßt, und einer Bilddetektor-Einrichtung (15) zum Abtasten des Bereiches (6), um ein elektrisches Wechselsignal für die Bildpunkte des Bildes beim Erfassen der dunklen und hellen Bereiche zu erhalten, gekennzeichnet durch eine Recheneinrichtung (16) zum Berechnen des Gradienten des elektrischen Signals als Absolutwert der Amplitudendifferenz von naheliegenden Bildpunkten der elektrischen Signale,
eine ein Diagramm erzeugende Einrichtung zum Erzeugen eines Diagramms der Anzahl der Bildpunkte mit den berechneten Werten des Gradienten und
eine Vergleichseinrichtung (17) zum vergleichen der Werte des Diagramms, das am Ende der Untersuchung des geprüften Bereiches erhalten wird, mit vorgegebenen Bezugswerten.

6. Vorrichtung nach Anspruch 5, dadurch gekennzeichnet, daß die Beleuchtungseinrichtung (5) eine Lichtquelle (10) und einen Schirm (11) umfaßt, der mit mehreren lichtundurchlässigen Teilen (12) im Wechsel mit lichtdurchlässigen Teilen versehen ist.

7. Vorrichtung nach Anspruch 6, dadurch gekennzeichnet, daß die lichtundurchlässigen und die lichtdurchlässigen Teile (13, 12) im wesentlichen geradlinig sind.

8. Vorrichtung nach Anspruch 6, dadurch gekennzeichnet, daß die lichtundurchlässigen und die lichtdurchlässigen Teile (13, 12) gekrümmt sind.

9. Vorrichtung nach Anspruch 8, dadurch gekennzeichnet, daß die gekrümmten Teile im wesentlichen ringförmig und konzentrisch sind.

10. Vorrichtung nach einem der Ansprüche 5 - 9, dadurch gekennzeichnet, daß die lichtundurchlässigen und die lichtdurchlässigen Teile im wesentlichen die gleiche Breite haben.

11. Vorrichtung nach einem der Ansprüche 5 - 10, dadurch gekennzeichnet, daß die lichtundurchlässigen und die lichtdurchlässigen Teile (13, 12) ein Gitter bilden, dessen minimale Breite durch das Optimeter bestimmt ist, das durch den maximalen Neigungswinkel von elementaren Teilen, die die wellige Oberfläche des geprüften Bereiches (6) bilden, und den Abstand zwischen der Lichtquelle (10) und der Oberfläche des Bereiches (6) bestimmt ist, so daß die maximale betrachtete Neigung nicht dazu führt, daß durch die elementaren Teile des Bereiches (6) lichtundurchlässige oder lichtdurchlässige Teile derselben Art reflektiert werden.

12. Vorrichtung nach einem der Ansprüche 5 - 11, dadurch gekennzeichnet, daß die Bilddetektor-Einrichtung wenigstens eine Fernsehkamera (15) umfaßt.

## Revendications

1. Méthode pour la détection et la classification du froncement d'une surface traitée, comprenant, dans l'ordre, les étapes de :
éclairage d'une surface à examiner, au moyen d'un faisceau lumineux comprenant essentiellement une pluralité de zones lumineuses alternées avec des zones sombres et de préférence avec des bords découpés entre les zones adjacentes respectives ;
détection d'un faisceau réfléchi par ladite surface en examen, au moyen d'un détecteur d'image conçu pour balayer ladite surface de façon à obtenir un signal électrique alternatif pour les pixels de l'image lors de la détection desdites zones sombres et lumineuses ; caractérisée par les étapes suivantes :
calcul du gradient dudit signal électrique comme étant la valeur absolue de la différence d'amplitude de pixels contigus desdits signaux électriques ;
génération d'un diagramme du nombre de pixels ayant les valeurs de gradient calculées ; et
comparaison des valeurs du diagramme, obtenu à la fin d'une inspection de ladite surface en examen, avec des valeurs de référence prédéterminées.

2. Méthode suivant la revendication 1, caractérisée en ce qu'elle comprend l'affichage des valeurs calculées pour lesdits gradients de façon à obtenir, à la fin de l'analyse de ladite surface en examen, un diagramme dans lequel les valeurs calculées pour lesdits gradients sont indiquées en relation au nombre de pixels desdits détecteurs d'image ; ledit diagramme étant subdivisé en diverses parties définissant chacune, par comparaison avec des échantillons précédement préparés, une valeur d'étalement correspondante.

3. Méthode suivant la revendication 1 ou 2, caractérisée en ce que l'éclairage de ladite surface en examen est effectué au moyen d'un faisceau lumineux intermittent.

4. Méthode suivant une quelconque des revendications précédentes, caractérisée en ce qu'elle comprend le déplacement relatif dudit faisceau lumineux et des moyens de détection d'image par rapport à ladite surface en examen.

5. Dispositif pour la détection et la classification du froncement d'une surface traitée, comprenant des moyens d'éclairage (5) prévus pour éclairer une région (6) à examiner de ladite surface au moyen d'un faisceau lumineux (7) comprenant essentiellement une pluralité de zones lumineuses alternant avec des zones sombres, les bords entre les zones adjacentes respectives étant découpés, des moyens de détection d'image (15) pour balayer ladite région (6) de façon à obtenir un signal électrique alternatif pour les pixels de l'image lors de la détection desdites zones sombres et lumineuses,
caractérisé en ce qu'il comprend
des moyens de calcul (16) pour calculer le gradient dudit signal électrique comme étant la valeur absolue de la différence d'amplitude de pixels contigus desdits signaux électriques ;
des moyens de génération de diagramme pour engendrer un diagramme du nombre de pixels ayant les valeurs de gradient calculées ; et
des moyens de comparaison (17) pour comparer les valeurs du diagramme, obtenu à la fin d'une inspection de ladite région en examen, avec des valeurs de référence prédéterminées.

6. Dispositif suivant la revendication 5, caractérisé en ce que lesdits moyens d'éclairage (5) comprennent une source de lumière (10) et un écran (11) équipé d'une pluralité de parties opaques (12) en alternance avec des parties transparentes.

7. Dispositif suivant la revendication 6, caractérisé en ce que lesdites parties opaques et transparentes (13,12) sont essentiellement rectilignes.

8. Dispositif suivant la revendication 6, caractérisé en ce que lesdites parties opaques et transparentes (13,12) sont courbes.

9. Dispositif suivant la revendication 8, caractérisé en ce que lesdites courbes sont sensiblement annulaires et concentriques.

10. Dispositif suivant une quelconque des revendications 5 à 9, caractérisé en ce que lesdites parties opaques et transparentes ont sensiblement la même largeur.

11. Dispositif suivant une quelconque des revendications 5 à 10, caractérisé en ce que lesdites parties opaques et transparentes (13,12) forment une grille dont la largeur minimale est définie par le levier optique représenté par l'angle maximal d'inclinaison de parties élémentaires formant la surface froncée de ladite région (6) en examen et par la distance entre ladite source de lumière (10) et la surface de ladite région (6), de sorte que l'inclinaison maximale considérée n'engendre pas de réflexion, par lesdites parties élémentaires de ladite région (6), de parties opaques ou transparentes du même type.

12. Dispositif suivant une quelconque des revendications 5 à 9, caractérisé en ce que lesdits moyens de détection d'image comprennent au moins une télécaméra (15).
